# EUROPEAN PATENT SPECIFICATION

(11) **EP 4 479 706 B1**
(45) Date of publication and mention of the grant of the patent: **29.10.2025**
(21) Application number: 23704136.3
(22) Date of filing: 07.02.2023
(51) Int. Cl.: G01C 21/30, G01C 21/34, G06N 3/02, B60W 50/00, G06N 3/044, G06N 3/045, G06N 3/08, G06N 7/01

(54) **DETERMINING A PROBABILITY OF A VEHICLE TRAVERSING A PATH**
BESTIMMUNG DER WAHRSCHEINLICHKEIT DER DURCHFAHRT EINER STRECKE DURCH EIN FAHRZEUG
DÉTERMINATION DE PROBABILITÉ QU'UN VÉHICULE TRAVERSE UN TRAJET

(30) Priority: 18.02.2022 GB 202202236
(43) Date of publication of application: 25.12.2024
(73) Proprietor: TomTom Navigation B.V., 1011 AC Amsterdam (NL)
(72) Inventor: VAN HULST, Johannes Michaël, 1011 AC Amsterdam (NL); SOSKIC, Pavle, 1011 AC Amsterdam (NL); VELIAKHMEDOV, Rinat, 1011 AC Amsterdam (NL)
(74) Representative: Dehns
(86) International application number: PCT/EP2023/053020
(87) International publication number: WO 2023/156259

(56) References cited:
- EP-A1- 3 871 911
- DE-A1- 102009 024 153
- DE-A1- 102011 078 946
- US-A1- 2010 010 733
- US-A1- 2015 300 825

## Description

### BACKGROUND OF THE INVENTION

This invention relates to methods, apparatus and software for determining the probability of a vehicle traversing a path.

When people drive a vehicle to a destination, often there is no pre-configured route which they have given as input to the navigation system. However, it can be advantageous to predict the likely path the driver will take.

EP 3871911 A1 discloses a computer implemented method for determining the most probable path of a vehicle, for a driver assistance function of the vehicle.

WO 2014/068094 A1 by TomTom International B.V. discloses an Advanced Driver Assistance System (ADAS) that uses digital location-based data, driver data and/or vehicle data to determine the relative probabilities of different outgoing paths being taken by a vehicle at a decision point, such as a road junction, along a currently traversed road segment. The probabilities may be calculated from digital map data based on the angles, road classes and speed profiles of the paths at a decision point. They may also be based on historical path data for individual drivers and/or vehicles that is indicative of a frequency with which each of the paths from a decision point was taken by that driver and/or vehicle.

However, rule-based calculations can be inaccurate as they do not take account of the habits of actual drivers. Using an individual's historical path data, as disclosed in WO 2014/068094A1, may lead to more accurate predictions, but only for journeys that individual makes repeatedly. When a driver makes a non-routine trip, the probabilities are likely to be inaccurate, as it is necessary to fall back to the rule-based calculations.

Embodiments of the present invention aim to provide more accurate predictions.

### SUMMARY OF THE INVENTION

From a first aspect, the invention provides a method for determining a probability of a vehicle traversing a path, the method comprising:
receiving input data into a computer-implemented model, wherein the input data is representative of two or more path segments traversed sequentially by a vehicle to reach a decision point, and of a set of candidate path segments for the vehicle to traverse to leave said decision point;
the model determining a first state vector from the received sequence of path segments;
the model determining a second state vector from the received set of candidate path segments; and
the model processing the first and second state vectors to generate probability data representative of a respective probability of the vehicle traversing each candidate path segment.

From a second aspect, the invention provides a computer processing system for determining a probability of a vehicle traversing a path, wherein the computer processing system is configured to:
provide a model for determining a probability of a vehicle traversing a path;
receive input data into the model, wherein the input data is representative of two or more path segments traversed sequentially by a vehicle to reach a decision point and of a set of candidate path segments for the vehicle to traverse to leave said decision point;
determine, within the model, a first state vector from the received sequence of path segments;
determine, within the model, a second state vector from the received set of candidate path segments; and
process, within the model, the first and second state vectors to generate probability data representative of a respective probability of the vehicle traversing each candidate path segment.

From a third aspect, the invention provides computer software comprising instructions which, when executed on a computer processing system, cause the computer processing system to:
provide a model for determining a probability of a vehicle traversing a path;
receive input data into the model, wherein the input data is representative of two or more path segments traversed sequentially by a vehicle to reach a decision point and of a set of candidate path segments for the vehicle to traverse to leave said decision point;
determine, within the model, a first state vector from the received sequence of path segments;
determine, within the model, a second state vector from the received set of candidate path segments; and
process, within the model, the first and second state vectors to generate probability data representative of a respective probability of the vehicle traversing each candidate path segment.

Thus it will be seen that, in accordance with embodiments of the invention, probabilities that the vehicle will take each of a set of paths from a decision point can be determined using a model that processes state vectors representative of how the vehicle reached the decision point, and of what candidate paths the vehicle could take. By training such a model on historic trip data, it can learn to provide accurate predictions based on actual vehicle movements, and can learn to provide accurate predictions even when a driver and/or vehicle is traveling along a path that driver and/or vehicle have never followed before-e.g. by learning typical patterns of behaviour for that user or vehicle, and/or for a population of users or vehicles.

The model may be a machine-learning model. The model may comprise one or more artificial neural networks. It may comprise any number of layers. It may comprise a set of weights whose values are determined by training the model. The model may be an already-trained model or it may be a model for training. The disclosed steps may be performed as part of a training process or as part of an inference process.

The sequence of path segments traversed by the vehicle may be determined from probe data for the vehicle. It may be determined from one or more sensors, such as a Global Navigation Satellite System (GNSS) sensor in the vehicle.

The set of candidate path segments may be determined from map data. The map data may encode a graph of nodes joined by edges. The edges of the graph may be directed or undirected. Each edge may correspond to a respective path segment. The nodes may correspond to connections such as junctions (e.g. crossroads or highway exits), or the nodes may also correspond to topological features such as end points or to changes in a road attribute such as a legal speed limit or number of lanes. A decision point may be any node at which three or more edge (i.e. path segments) meet. However, the graph may also include nodes that cannot be decision points. In some embodiments, the graph is representative of a road network (e.g. of a country or other region). The vehicle may be a road vehicle.. The shape of a path segment (e.g. road segment) may be represented by a line or by a polyline in the map data.

Some embodiments comprise training the model using historic trip data. The input data may be training data. It may be determined at least in part from historic trip data, i.e. representing actual journeys by one or more vehicles. Machine-learning may be used to train the model on the historic trip data. The training may comprise a supervised learning process. The model is preferably trained end-to-end. Training may comprise using backpropagation to adjust one or more weights of the model.

The model may be trained on sequences of path segments determined from historic trip data, and associated sets of candidate paths segments determined from map data. For each of one or more points (e.g. road junctions) along a trip in the historic trip data, a respective set of candidate path segments for the point may be determined from the map data. A correct path segment of the candidate path segments for the point may be determined from the historic trip data, being the path segment that was actually taken by the vehicle according to the trip data. The correct path segment may be used as a ground truth for training the model, e.g. by applying a distance metric to the probability data generated by the model and to the correct path segment, and updating the model based on a determined distance.

In a preferred set of embodiments, the model is trained on historic trip data relating to a plurality of vehicles and/or a plurality of drivers. This can enable the model to learn from the collective behaviour of many different drivers, which may allow it to make accurate predictions for a vehicle even when the vehicle is traversing a route that was not present in the historic data.

However, preferred embodiments also train the model using user-specific historic trip data, preferably for a plurality of respective users. The model may use one or more weights determined from user-specific historic trip data for a particular vehicle or driver when operating in inference mode to generate probability data in respect of the same vehicle or driver.

Some embodiments comprise operating the model in an inference mode. The model may be a model trained using historic trip data. It may have been trained as disclosed herein. The sequence of path segments traversed by the vehicle may be input to the model as the vehicle is travelling towards the point-i.e. in real-time. The probability data may be generated by the model before the vehicle reaches the point.

In some embodiments, each traversed and/or candidate path segment is represented by at least a path-segment identifier. The path-segment identifier may be a numerical value, e.g. comprising or derived from unique identifiers or geographical coordinates of the two nodes at either end of the path segment. The path-segment identifiers may be unique over all the path segments in the map data and/or may be globally unique. This gives the potential for the model to learn from vehicle habits at specific points in the path network.

In some embodiments each traversed and/or candidate path segment is represented in the input data by at least a path type and/or a direction of travel. The path type may be a functional road class (FRC). The direction of travel may be a binary indication (e.g. representing travel up or down a path segment), but in some embodiments it has more than two states-e.g. having four, eight, 360 or more possible values. It may represent a bearing, which may be determined relative to a map and/or to Earth, e.g. to a nearest one degree or a nearest 45 degrees. A direction of travel may be useful even when a path segment identified is also provided, since it can allow the model to use bearing information to influence the generated probabilities, even when such information is not available to the model by other means (e.g. when it is not present in map data accessible to the model). The model may, for example, learn that shallow turns are more probable than steep turns, at least in some situations.

Although some sequences received as input data comprise two or more segments, the model may also be arranged to receive and process single-segment sequences. However, when multiple segments are available, this can provide more accurate predictions than when considering only the single last segment before a decision point. The model may be configured to receive sequences of path segments or fixed or variable length, i.e. the length of the sequence may change dynamically during use. The model may impose a maximum sequence length. In some embodiments, each sequence comprises a number of path segments that is least one and at most twenty, or at least two and at most ten, or of a constant value five. Sequence lengths of these values have been found to provide a good balance between accuracy and model complexity.

The model may comprise a sequence-embedding layer arranged to receive the sequence of path segments and to output data for processing by any number of convolution, summation and/or recurrent neural network layers.

The model may comprise a convolutional neural network (CNN) (e.g. a one-dimensional CNN) which may be arranged to receive output (e.g. embeddings) from the sequence-embedding layer. It may be trained to extract relevant features from the output. The CNN may be arranged to output to any number of further convolution, summation and/or recurrent neural network layers. It may be trained end-to-end with the entire model.

In some embodiments, the model may comprise a recurrent neural network (RNN). It may be arranged to receive output from the sequence-embedding layer or the CNN. It may be arranged to generate the first state vector by receiving data representative of the sequence of path segments into the RNN. (However, in some embodiments the RNN is arranged not to receive or process the set of candidate path segments.) The first state vector may correspond to a final output state of the RNN. The RNN may be trained on sequences of path segments from historic trip data. It is preferably trained by training the whole model end-to-end.

The RNN may be operated in inference mode as well as training mode. However, in some embodiments, the RNN is present only in a training version of the model, and is at least partly replaced with a look-up database in an inference version of the model. The sequence-embedding layer may also be replaced by the look-up data. Thus, in some embodiments, the model is an inference model that is generated from a training model after training of the training model is complete. The inference model may comprise precomputed look-up data representative of respective precomputed first state vectors for each of a plurality of sequences of path segments, and preferably for every sequence that was in the historic training data, or potentially for every possible sequence of path segments in a map, up to a predetermined length (e.g. up to five segments long). The precomputed data may replace some or all of the RNN in the inference model. The model may use the precomputed look-up data to determine the first state vector for a received sequence of path segments. This can provide computation efficiency by performing a look-up operation that is quicker than passing the sequence through the trained RNN operated in inference mode. However, predictions for unknown sequences of path segments may still be computed in real time.

The model may comprise a candidate-embedding layer arranged to receive the set of candidate path segments (e.g. as a single matrix). The candidate-embedding layer may output a tensor having a first dimension equal to the number of candidates. It may have a second dimension corresponding to a number of attributes for each candidate.

It is preferably trained by training the model end-to-end. It is preferably different from the sequence-embedding layer; this advantageously allows the candidates to be embedded differently from the traversed sequences, which may improve the performance of the model.

Processing the first and second state vectors to generate the probability data preferably comprises determining similarity data (e.g. a combined state vector) representative of a measure of similarity between the first and second state vectors. This can allow the model to learn to produce high outputs for candidates that have strong affinity with a received sequence. This may comprise calculating a dot product between the first and second state vectors. Although the similarity data could be generated in other ways, e.g. within a neural network, a dot product is computationally fast, which may be advantageous when using the model for real-time prediction.

The processing preferably comprises passing the similarity data (e.g. the dot product), optionally after augmentation as described below, through a fully connected output layer of the model. The probability data may then be determined by performing a softmax operation on the output of this fully connected output layer.

The model may output the probability data, or it may process the probability data further, e.g. to determine a most probable path and to output an identifier of the most probable path.

The model may be arranged to receive additional input data, for processing in training and/or inference, which it may process when generating the probability data.

The additional input data may comprise time data representative of a time associated with the traversal of the sequence of path segments by the vehicle. This can allow the model to predict probable paths based on factors such as time of day and/or day of the week, which may influence vehicle movements.

The additional input data may comprise identity data (e.g. a unique identifier) representative of the identity of the vehicle and/or of a driver of the vehicle. The model may be trained using identity data and may receive identity data when operating in an inference mode. This can allow the model to learn to predict probable paths that are tailored to a particular vehicle and/or driver. For example, the model may learn a particular driver's regular commute to work. The model may nevertheless also be trained on historic trip data for a plurality of vehicles. In this way, the model can use information about vehicles in general as well as information about a particular vehicle or driver when generating probabilities for the particular vehicle or driver.

The model may comprise a plurality of sub-models, which may be trained together-i.e. end to end. In particular, it may comprise a general model (which may comprise one or more general layers) and a contextual model (which may comprise one or more contextual layers), wherein the general model is arranged to output data (e.g. logit vectors) to the contextual model. The general model may be configured to generate output that is not dependent on said additional input data, while the contextual model may be configured to generate output that is dependent on said additional input data. The global model may comprise an RNN as disclosed herein. The contextual model may comprise one or more CNN layers. The RNN may be arranged not to receive or process user (e.g. vehicle or driver) identity data and/or time data. Instead, such additional input data may be processed by the contextual model. The additional data may be processed alongside the first and second state vectors. The model may be configured to concatenate the additional data (e.g. represented by a vector embedding) with a combined state vector generated from the first and second state vectors (e.g. from the dot product of the first and second state vectors), thereby forming an augmented state vector from which the probability data may be generated. The augmented state vector may be input to a fully connected output layer, e.g. as described above.

The generated probability data may be stored in a memory and/or output (e.g. over a network connection or over a software interface).

In some embodiments, the probability data may be used to determine information for outputting to a driver of the vehicle (e.g. visually and/or audibly) and/or control data for controlling motion of the vehicle (e.g. to reduce the speed of the vehicle). The information may be assistance information. It may comprise speed limit information. The model may be implemented at least partly in the vehicle, e.g. in a computer system built into the car or in a smartphone or a satellite navigation device, or it may be implemented wholly or partly on a server remote from the vehicle. The vehicle may communicate probe data (e.g. GNSS position data) to the server over a network (e.g. a radio network) and may receive assistance information and/or control data from the server, preferably before the vehicle reaches the decision point.

The methods disclosed herein may be at least partly computer-implemented. The computer software disclosed herein may be on a transitory or a non-transitory computer-readable medium. The model may be implemented on a single processing device (e.g. a server) or may be implemented across multiple processing devices, which may be in different geographical locations. The model may be implemented for use in inference mode on a computer processing system that is different from a computer processing system that was used to train the model.

Receiving data (e.g. input data) may comprise retrieving the data from a memory (e.g. a memory of the processing system) or receiving it over a network connection.

The model may comprise any number of further convolution layers, dense blocks, and other processing layers, in addition to those described above. The model may comprise software instructions for one or more processors, or may comprise dedicated hardware logic, or may be implemented using a combination of software and application-specific hardware. The software may comprise instructions that are stored in a memory of the computer processing system. The computer processing system may comprise one or more of: CPUs, DSPs, GPUs, FPGAs, ASICs, volatile memory, non-volatile memory, inputs, outputs, displays, network connections, power supplies, radios, clocks, and any other appropriate components. It may comprise one or more servers or computers. It may comprise a microcontroller or system-on-chip (e.g. when implementing the trained model for inference operation). It may be configured to store or display or output the probability data.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is a schematic drawing giving a high-level overview of a prediction system embodying the invention;
Figure 2 is a portion of a graph represented by an electronic map data;
Figure 3A is a portion of a graph shaded to illustrate the selection of the most probable outgoing path if using a lowest Functional Road Class rule for an exemplary junction;
Figure 3B is a portion of a graph shaded to illustrate the selection of the most probable outgoing path if using a lowest Functional Road Class rule for a different exemplary junction;
Figure 4 is a portion of a graph labelled to illustrate a path traversed up to a given prediction point, and following candidate segments, as received as input by systems embodying the invention;
Figure 5 is a high-level schematic diagram of a machine-learning model implemented by embodiments the invention;
Figure 6 is a detailed schematic diagram of a machine-learning model implemented by embodiments the invention;
Figure 7 is a schematic diagram of a machine-learning system embodying the invention;
Figure 8 is a schematic diagram that shows an implementation of the machine-learning platform in which some of the prediction computation is performed on a client device;
Figure 9 is a table showing the performance of different prediction models;
Figure 10 is a graph showing the performance of an FRC and bearing prediction model;
Figure 11 is a graph showing the performance of a Markov chain prediction model;
Figure 12 is a graph showing the performance of a personalised neural network model in accordance with embodiments of the present invention; and
Figure 13 is a table showing the performance of different prediction models on path segments not seen in the training data of a model.

### DETAILED DESCRIPTION

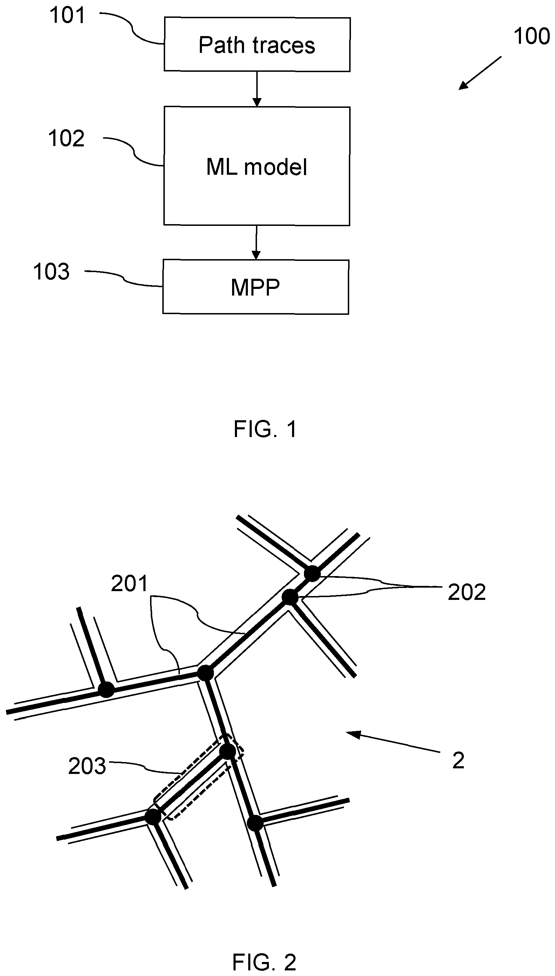

Figure 1 gives a high level overview of a prediction system 100 embodying the invention, in which a prediction model is used to identify which of a set of road segments a road vehicle (e.g. a car) is most likely to traverse next. The system 100 is built around a machine-learning (ML) model 102. Path traces 101 are input to the machine-learning model 102, which identifies a most probable path (MPP) 103 that will be traversed next.

When operated in a training mode, the path traces given as input are taken from historic journeys travelled by one or more vehicles and the model 102 learns how to predict accurate MPPs from the paths that were taken in these historic trips.

Once trained, the model 102 can be operated in an inference mode in which the path traces 101 are given as input to the model 102 in real-time and are a sequence of recently traversed roads for a particular vehicle as it travels through the road network. The model 102 may be the exact same model that was used in the training process, or it could be a replica or an inference version of the training-mode model.

The system 100 may be implemented in a vehicle (e.g. as software executing on a computer built into a car, or executing on a portable device such as a user's smartphone), or it may be at least partly implemented on a static server, arranged to communicate with vehicles over a network (e.g. over radio links). It may be used to provide information services to a driver of a vehicle or directly to the vehicle. Identifying a MPP may be particularly useful for ensuring relevant information is provided when the system 100 does not have access to a pre-planned route for the vehicle, e.g. because the driver has not specified a destination to a navigation component.

Some embodiments may be used within an advanced driver assistance system (ADAS), which may include features such as those disclosed in WO 2014/068094A1. Some may be used to provide Intelligent Speed Assistance (ISA), in which speed limit data is used to advise drivers of the current speed limit and/or automatically limit engine power to avoid the speed limit being exceeded.

Road-vehicle navigation systems traditionally operate on electronic map data describing a road network in an area. The electronic map is typically represented as a graph comprising arcs (i.e. edges) representing road segments, and nodes (i.e. vertices) representing road connections, such as junctions, exits and end points. In this context, graphs are typically directed graphs, so the order of the nodes that the arc connects is relevant. A variant is an undirected graph in which the arc connects two nodes in both directions. Both approaches can be used in an electronic map. A node in a directed graph has at least one incoming arc and zero or more outgoing arcs. A "decision point" node in a directed graph of road segments typically has an incoming road segment and at least two outgoing road segments. Endpoints (e.g. for dead-end streets) and "bivalent" nodes (used to encode a change of real world properties along a road) are therefore not decision point nodes.

Each arc and node in the map may be associated with one or more attributes that describe a feature of the road segment or the connection point. A road segment may be associated with attributes that describe one or more physical or abstract features of the road network, such as average speed of travel, legal speed limit, direction of travel, length of the road segment, average turn time for a junction, shape of the road segment, number of lanes, etc. The shape of each road segment may be represented by a line or a polyline.

The system 100 uses such map data, along with path traces 101, in order to predict the most probable path ahead. In the map data, the road topology (e.g. of a continent, country or city) is split into distinct sections between decision points. Nodes may also be located at points along a road where a road attribute changes, such as the speed limit, when applying this prediction model for use with Intelligent Speed Assist. Figure 2 shows a graph network 2 extracted from an electronic map of a road network. The graph 2 comprises edges 201 between points 202. In this example, the edges 201 are all straight lines, but they could be polylines which may allow the graph 2 to have a closer correspondence between the lengths and/or shapes of edges and the lengths and/or shapes of the actual roads they represent. Edges may comprise respective pairs of directed segments, in opposite directions, with each directed segment (e.g. the highlighted segment 203) having an associated unique identifier. Each directed segment 203 may also have one or more road attributes associated with it, including a bearing (e.g. the average compass direction along the path segment), a functional road class (FRC) (e.g. distinguishing between minor roads, major roads, freeways, etc.), and a speed limit.

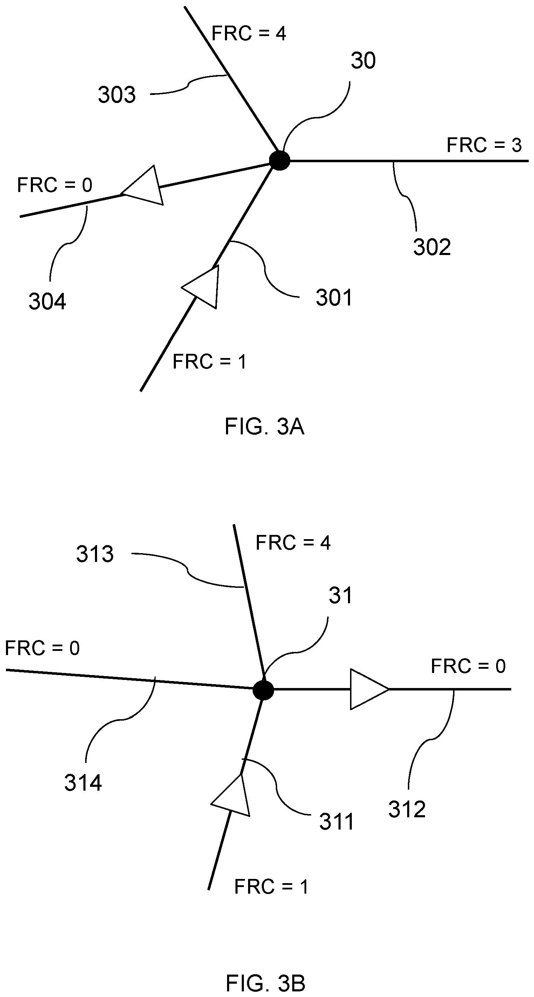

A naïve approach to determining an MPP might be a rule-based approach, similar to that disclosed in WO 2014/068094A1, in which angle and functional road class are used in a rule-based method that is applied equally to every decision point. However, the accuracy of such an approach is often poor, as illustrated with reference to Figures 3A and 3B.

Figures 3A & 3B show the results of determining the most probable outgoing path from an exemplary junction (i.e. a decision point), for a vehicle arriving along an incoming path 301, in accordance with a naïve rule of selecting the lowest Functional Road Class (FRC) value (as representing the most major road) and, if this results in a multiple candidates, then selecting the shallowest angle of turn. In Figure 3A, for the incoming path segment 301, the outgoing path segment 304 has a lower FRC than path segments 302 and 303, and is therefore always chosen as the most probable outgoing path, regardless of the collective behaviour of drivers in general at this particular junction 30, and regardless of the particular driver's normal driving habits at this junction 30 and elsewhere. Figure 3B illustrates the result of determining the most probable outgoing path from a different junction 31 in accordance with this same rule, where outgoing paths 312 and 314 have the same joint-highest FRC of zero (i.e. both motorways). Here path 312 is selected as the most probable outgoing path, because it makes a smaller angle with the incoming path 311 than either of the other candidate path segments.

The accuracy of such a rule-based approach may be improved upon by providing a model that enables predictions to be made based on sequences of previously traversed roads. One possible approach is to create personalised Markov models for each driver that take into account specific driver history, however this approach can rapidly become infeasible in practice as the number of users grows, because it requires storing individual transition probabilities for each user and for every traversed path sequence combination. If different Markov models are provided for different time periods (e.g. different hours of the day), the requirements scale up even faster. Although resulting in a more accurate prediction than purely rule-based approaches, the volume of data required to be stored and processed when using Markov models for personalised predictions can become impracticable. Furthermore, in areas where global or personalised trip historical data is sparse, a Markov model-based approach may still be unable to make accurate predictions.

Instead, the present embodiment 100 trains neural networks in the machine-learning model 102 on historic trip data acquired from multiple drivers and/or vehicles, in order to learn general habits. It additionally biases the model 102 for a particular driver or vehicle, using user-specific historic trip data for that particular driver or vehicle, in order to give more accurate predictions for that driver, e.g. when the driver is travelling along similar routes as were present in the user-specific trip data. It does this by including identifiers for the driver and/or vehicle, as additional contextual information, which is provided to the model during training and again at inference.

The proposed approach uses sequences of traversed segments up to a decision point to make predictions. Using sequences of paths, as well as contextual information, has been found to produce more accurate predictions for what path segment will be taken next by the user, with less occurrences of "resets"-see the experimental validation section below. A reset indicates that an incorrect prediction of the most likely next turn probability has been made.

In some embodiments, rules based on FRC and bearing may be used for determining a MPP at points in a map where no historic data is available, with model-based predictions being used in other areas. Where data has been available to train the machine-learning model, determining the most probable path from global and/or user-recurrent behaviour can provide a better prediction than simpler FRC and bearing rules. Using only FRC and bearing is quick computationally, because both features can only have limited values. The model could be trained only on a FRC and bearing for each path segment. However, including directed segment identifiers as input to the model increases the complexity, as the number of possible values for the directed segments is high, but also improves the predictive performance of the model.

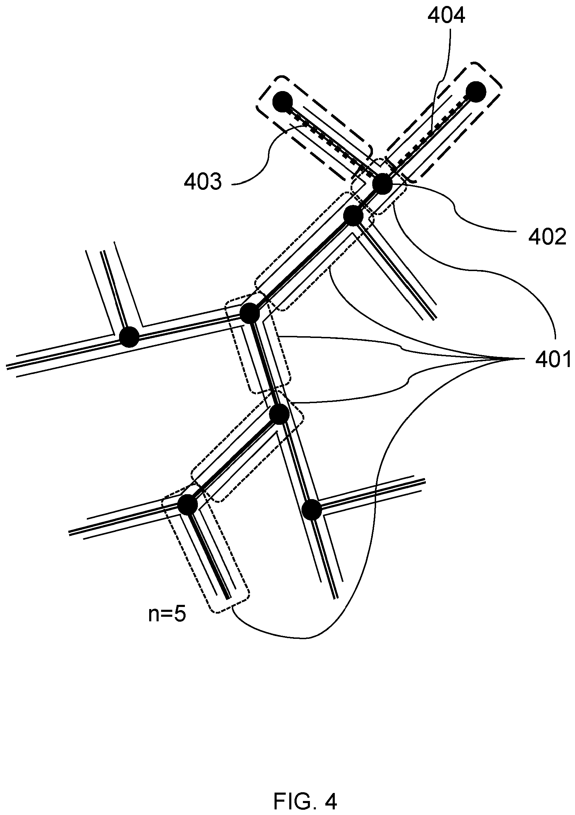

Figure 4 shows an example of the data which is given as input when requesting a prediction using directed segment identifiers from the trained machine-learning model 102. The input to the machine-learning model comprises a sequence of identifiers for n=5 directed road (i.e. path) segments 401 recently traversed up to the decision point 402, as well as their associated FRCs and bearings (angles). There may be a fixed maximum number of segments allowed in the sequence query, such as five. There is a possibility that the number of directed segments *n* may vary between prediction requests.

Two candidate segments 403, 404 that could be traversed next from the decision point 402 are determined from map data and also given as input to the machine-learning model 102, using their respective directed segment identifiers, along with their associated FRC and bearing attributes. The candidates may be determined from the map data by the same processing system that operates the model, or by a separate processing system.

Using multi-segment sequences for training and inference mode, rather than just the one most recently traversed segment, can allow the model 102 to learn from more complex behaviour patterns. This can enable particularly accurate predictions, particularly if the specific user, vehicle, or time of day are taken into account as well.

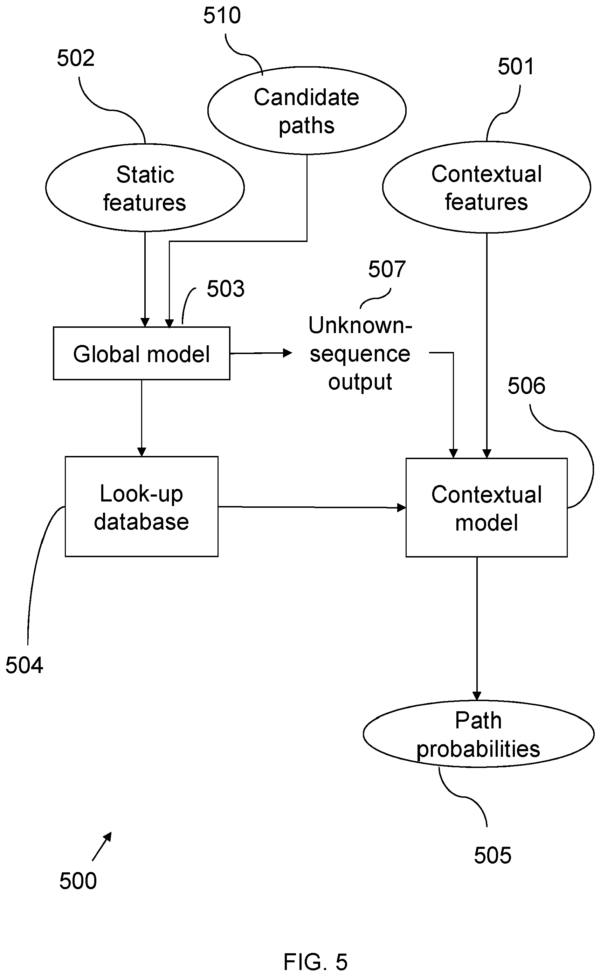

Figure 5 provides details of an exemplary machine-learning model 500, which may be an implementation of a model 102 as described above. Contextual features 501 such as a driver identifier, a vehicle identifier, and a time and/or date, may be received into the model, alongside static features 502 such as FRC, bearing, and identifiers for each of the directed road segment in an input sequence. A set of candidate path segments 510, determined from map data, is also provided for each input sequence. Together, these elements 501, 502, 510 constitute input data for the model.

The model 500 comprises a global model 503 and a contextual model 506. The global model 503 outputs logit vectors to the contextual model 506, which can take account of "contextual" features, such as temporal and user-specific features, to "bias" the output of the global model 503 to deal with changes inherent in such features. The contextual model 506 may be lower in complexity than the global model 503.

The global model 503 and contextual model 506 are trained together in a common end-to-end training process. This training may be repeated at intervals, e.g. every week or every month, to incorporate up-to-date trip data. It may also be possible to update the contextual model 506 more frequently, when new user-specific trip data becomes available, without performing a full retraining, by use of appropriate masking, for example, by freezing all weights that are attributed to non-contextual parts of the model.

The global model 503 is trained with path traces (e.g. of up to n=5 segments long) from trips of anonymous users within a mapped region, using embeddings of the static features 502 of: directed segment identifier, FRC, and angle for each segment in the path trace sequence. The result of this is that predictions based on static features alone remain the same for all possible sequences of directed segments, and for all users, until the next re-training is performed.

In some embodiments, rather than operate the global model 503 directly in inference mode, equivalent look-up data may be precomputed, similar to a Markov chain, and used instead. This can allow the global model 503 to be implemented efficiently, despite being complex. Outputs from the global model 503 may be precomputed for all possible sequences leading to decision points in the map data. Although this may still be quite a large amount of data, the number of possible sequences is heavily constrained by the nature of the physical road network. Implementing the global model 503 at least partly using look-up data at inference time reduces the computational complexity of outputting the most probable path 505.

In inference mode, if the sequence of recently traversed segments has been precomputed and is stored in a look-up database 504, the stored output (e.g. a vector of logits) is retrieved and passed to the layer or layers of the contextual model 506. If the sequence has not been precomputed, the global model 503 is operated in inference mode, in real time, to produce an output 507 (e.g. a vector of logits) that is passed to the contextual model 506. The contextual model 506 incorporates the contextual features, and outputs respective path probabilities 505 for the candidate path segments 510. It may additionally or alternatively simply output an identification of the most probable path segment (i.e. the segment identifier with the highest probability).

Splitting the model 500 into stages which make predictions based on global behaviour, and vehicle/driver and/or time specific contextual behaviour allows the global model 503 to be feasibly precomputed, since it can be used the same by millions of vehicles and across all times of day, while the contextual model 506 is operated in inference mode to provide contextual learning for particular users. This approach reduces the complexity of predictions which need to be made on the fly. Conversely, not requiring pre-computation of results for every time of day or user reduces the volume of data which needs to be stored in advance.

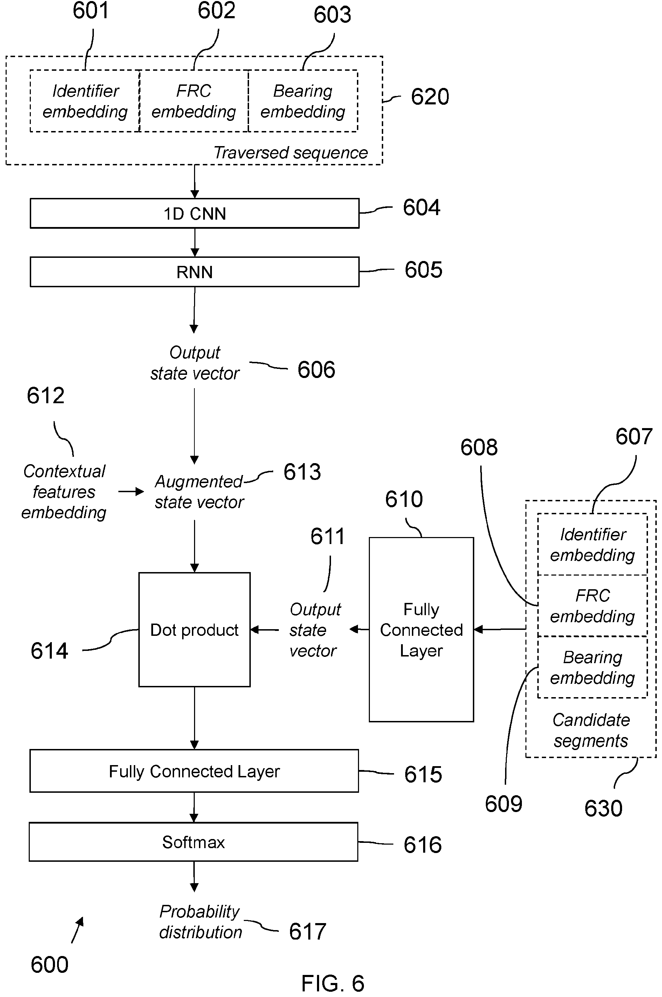

Figure 6 provides more details of an exemplary machine-learning model 600. This may be the same as the model 500 in Figure 5, or may be a different model. It shows how the directed segments and associated features given as input are used by the model 600 to generate a prediction. The model is trained end-to-end on historic trip data, e.g. using backpropagation.

A sequence 620 of traversed path segments comprises values that embed the following three static features for each path segment of the sequence: a directed-segment identifier 601, an FRC 602, and a bearing 603. This can be generated by an embedding layer (not shown) which attributes a unique set of weights to each given input and performs a linear transformation of the encoding of its input using the respective weights. Every functional road class as well as every segment identifier has its own unique set of weights (unless obfuscation has been applied, which may be made if the segment occurs infrequently, in some embodiments). The bearing of a segment is processed as the sine and cosine of the bearing, and passed through the embedding layer, which returns a linear transformation of both inputs. This generates a feature vector for each of the segment identifier, FRC and bearing respectively. These are concatenated to create a single feature vector for the respective item in a sequence. The process is repeated for every item in the sequence, resulting in a feature vector for each item in the sequence.

Following embedding, the sequence may be processed using any number of methods. In the embodiment shown in Figure 6, a one-dimensional (1D) Convolutional Neural Network (CNN) 604 receives the path segments of the sequence and learns to extract relevant features from them, before feeding the result through a Recurrent Neural Network (RNN) 605. This generates a first state vector 606 (e.g. a logit vector) for the sequence of most recently traversed segments.

Embeddings of directed-segment identifier 607, FRC 608 and bearing 609 are also provided for each of the set 630 of candidate segments. The embeddings are different from those used for the segment sequence, since they serve different purposes in the model. Individual candidate embeddings are produced in the same way as the input items of sequences, however the candidates are not subsequently processed as a sequence. These are fed through a Fully Connected Layer 610 to generate a second state vector 611. The Fully Connected Layer 610 multiplies each candidate vector by a weight matrix, thereby applying a linear transformation to the individual candidates, and outputs an aggregate feature representation of their features. This is done to match the dimensionality of the second state vector 611 to the first state vector 606. The Fully Connected Layer 610 also creates a more representative representation of the candidate feature vector by adding additional capacity to the model (i.e. model parameters).

In some embodiments, contextual features 612, comprising an embedding of a time value, and of driver and/or vehicle identifiers, for the traversed sequence 620 are also input to the model as an embedding vector. This contextual vector may be concatenated with the first state vector 606 to form an augmented state vector 613.

The processing system then calculates the dot product 614 of the augmented state vector 613 and the second state vector 611. This determines a measure of the similarity between each of the candidate segments and the sequence already traversed 620.

The output of the dot product 614 is then fed through a fully-connected output layer 615 and a softmax operation 616 is performed to output a probability distribution 617 for the given candidates 630.

The 1D CNN 604 and RNN 605 and fully-connected layer 610 correspond to the global model 503 of Figure 5, and may potentially be at least partly replaced, after training, with a look-up database.

Figure 6 shows contextual features 612 being introduced at the output of the RNN 605. Alternatively, in other embodiments contextual features (corresponding to the contextual model 506) may be fed into the global model after the Fully Connected Layer 615, or applied to the output probability distribution 617.

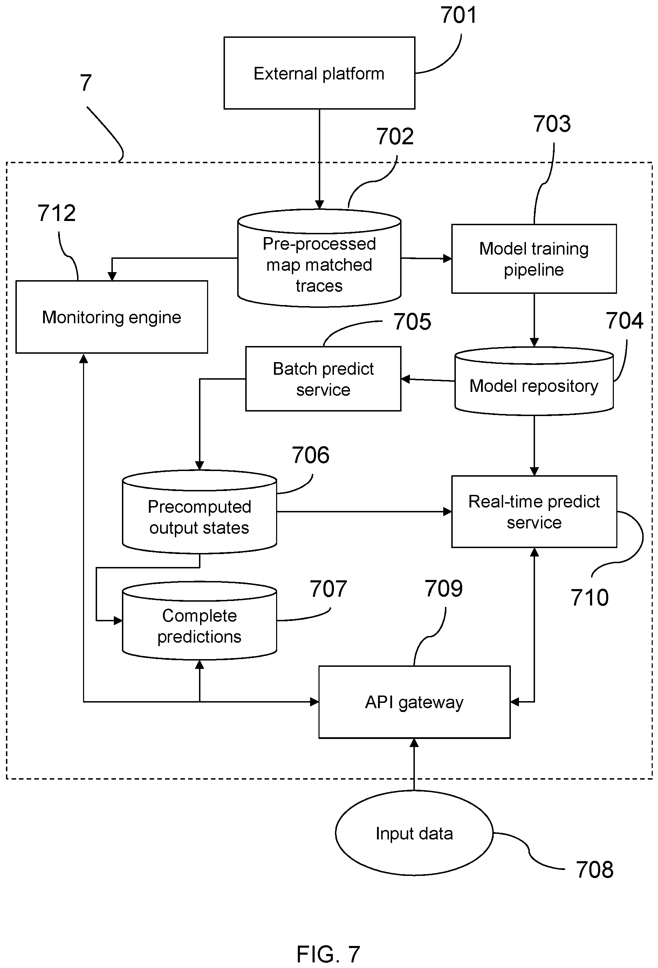

Figure 7 illustrates an exemplary structure of a processing system 7 that implements a model as disclosed herein (e.g. similar to the model 600 of Figure 6) and which makes use of precomputed predictions arising from static features. An external platform 701 provides historically map-matched traces, which are then pre-processed for use with the model. (Map-matching refers to a process of fitting location-based probe data, e.g. from a GNSS sensor, to the nearest road segment of the digital map, e.g. as described in WO 2018/019984 A1 and WO 2018/019989 A1, both by TomTom Navigation B.V.) The pre-processed map-matched traces 702 are pulled by the model training pipeline 703 to train the model for a given geographical region. The model is optionally trained independently per region because each model uses directed segment identifiers as an input, meaning that the complexity of the model increases with larger numbers of directed segments as the region is extended. Nonetheless, there are theoretically no limits and several regions could be combined into a larger model if desired. After a model has been trained, it is stored in the model repository 704.

Sequences of road segments, determined from the map data, are pre-processed by the batch predict service 705. The precomputed output states 706 arising from all these predetermined sequences can then be stored in a database. If only using static features to predict the next path (i.e. if the model does not consider contextual features), the precomputed output states 706 may represent the entire model. They may be processed further, such that the complete predictions 707 can be stored instead.

After training is finished, when a prediction is requested, input query data 708 is sent to the API gateway 709. If the sequence of recently traversed directed segments given in the request is known (i.e. is present in the database 706, the batch predict service 705 is queried with a simple look-up of the stored offline output. The sequence of recently traversed segments may be known if the sequence was used in the training data. Alternatively, all possible path sequences of length n for a geographical region could be stored. If only static features are being used for the prediction, the look up could retrieve a final prediction of the next candidate segment to be traversed from the complete predictions 707. If contextual features are to be included in the prediction, the precomputed output state 706 can be retrieved instead and passed to a real-time prediction service 710. In both cases, these processes reduce the computational complexity when serving predictions.

If the sequence of previously directed segments is unknown, the real-time prediction service 710 operates the RNN model in the repository 704 in inference mode and returns the final prediction using some or all of the available static and contextual features.

Where contextual features are also used for the prediction, the real time prediction service 710 operates one or more neural-network layers in inference mode to determine the final prediction of the most probable path segment using the precomputed output state 707 and the added contextual features (e.g. as described above with reference to Figure 6).

If complexity needs to be reduced, the real-time prediction service 711 may, in some embodiments, use only the FRC and bearing features, and not use segment identifiers. There may be sequences of FRCs and bearings that occur often, e.g. turns traversing from lower to higher road classes. The predictions for common sequences such as this could also be pre-processed and stored offline, then retrieved when the specific sequence of road identifiers is not known in the look-up data, but the sequence of FRCs and bearings fits with a known common manoeuvre. This may reduce the complexity of making predictions on the fly and therefore increase speed.

A monitoring engine 712 is used to monitor the accuracy of predictions, in order to give an indication of when the model 704 may need to be retrained due to increasing instances of inaccurate predictions. The monitoring engine 712 may then trigger the model training pipeline 703. Alternatively, a required re-training interval can be estimated by initially observing the length of time after which performance begins to drop when the model is first trained, then setting regular retraining intervals thereafter. The accuracy of the models can be evaluated by sampling predictions made at random, storing them, and later comparing the predicted to actual paths traversed.

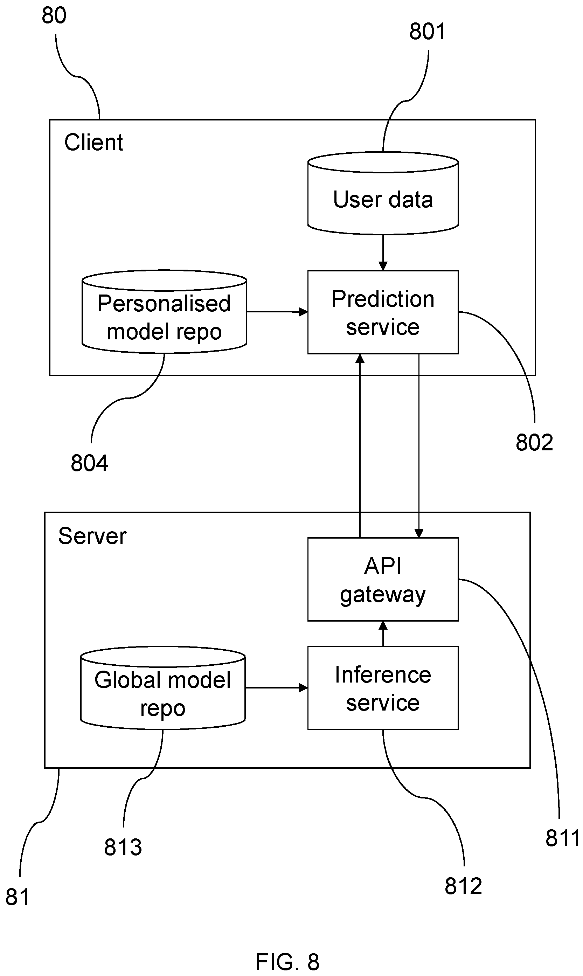

Figure 8 shows an exemplary implementation of a machine-learning platform where a model, as disclosed herein, is split between a client 80 and an online server 81. The client 80 could be a mobile client, e.g. being implemented by software executing on a driver's smartphone or in a built-in computer of a car or other vehicle. User data 801, including past road segments traversed by the user (e.g. a specific driver and/or vehicle) and a representation of the typical behaviour of the user, can be stored locally on the client 80. To predict a MPP for an upcoming decision point, a prediction service 802 on the client 80 sends a request to an API gateway 811 on the server 81. An inference service 812 on the server then uses a global model from the global model repository 813 to generate a partial prediction (e.g. which might be a first state vector 606 as in Figure 6), which is returned to the client 80. User data 801 and a partial model trained with personalised data from a personalised model repository 804 is used to complete the prediction. This approach can allow for processing close to the user, which may reduce processing load on the server and hence improve prediction speed. The approach also reduces overall cost, and provides a more seamless experience for the user, reducing the possibility of being affected by loss of network connection. The approach also allows the model to learn about the similarities between users, such that if arbitrary users A and B are similar, and if user A has not visited an intersection, whereas user B has, then it can use the learnings from user B to aid in the predictions for user A.

A set of predictions may also be transferred from the global model to a user in their immediate neighbourhood, after which predictions can be completed. This is effective if a user consistently drives in the same areas, allowing predictions to be stored locally and re-used for other trips.

### Experimental Validation

This section presents a simulation that has been implemented and used to validate an approach as disclosed herein. A description of the experimental set-up and results are provided below.

In order to predict a most probable path, the system learnt to predict the next item in a sequence for a set of directed segments. This was carried out using representation learning. Our Neural Network model incorporated both static and contextual features. It can be advantageous to combine all these features in a single model, but it must not be forgotten that such a model needs to scale towards hundreds of thousands of segments and millions of users. We developed a simplified model architecture, where outputs from a static feature model can be precomputed during inference time similar to a regular Markov Chain, and a contextual feature model, which is lower in complexity, only needs to bias the output of a static feature model's course towards dealing with the changes inherent to contextual features (e.g. time of day, user-specific behavior, etc).

To allow for focusing on data that is more likely to encapsulate personalized behaviour, we focussed on recurrences of path segments, and thus we kept trips if a user traversed between two communities at least five times and if the community by itself has been traversed at least 10 times. As we would like to decrease the sparsity and complexity of decision making of the data, even more, we inner joined the resulting data frame with anonymous OEM car-data, resulting in a total of 7200 trips for 259 users, out of which ~2000 are anonymous. We note that the data is still sparse, but noticed an improvement with respect to prior to filtering. The median number of occurrences for segments in the data set was thirty-eight.

To model our data, we split it into three datasets, namely *train, validation,* and *test.* As we envision a personalized model, we aimed to predict the "future" of a user. As such, we ordered the user's trips by time and optimized our model on the first 80%, validated our hyperparameters on the next 10%, and evaluated our model on the final 10% of the user's trips. We created sub-sequences of length five for each individual trip and tasked the model with predicting the next directed segment for a sequence given the past five sequences.

Below, we discuss our results and report on our test set, where the median number of decision points per trip is ~128. To evaluate the improvement of our models, we report the number of resets per trip (i.e. how often an incorrect prediction of the most likely next turn probability has been made). The reasoning behind this is that a single reset results in an additional call to the online service and thus additional costs, and a potential decrease in the user's experience.

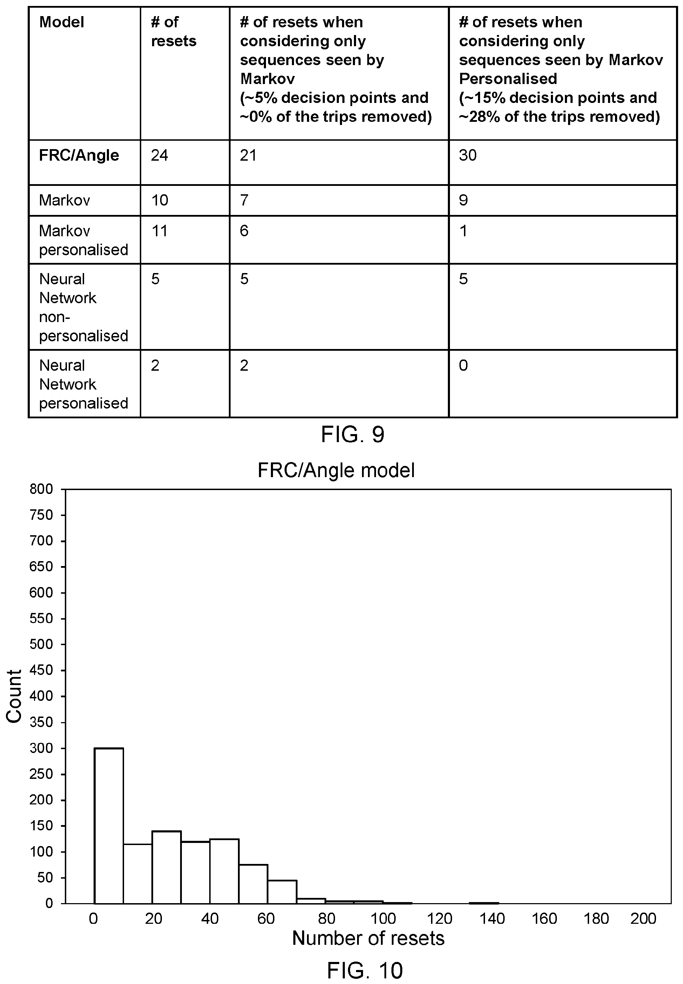

The table in Figure 9 shows the number of resets for various settings that were experimented with. The first column depicts the respective model, whereas the second, third, and fourth columns depict the number of resets with all data, with data present in the global Markov model and with data present in the personalized Markov model respectively. The FRC/Angle model is a rule-based approach that considers only functional road class and angle. We observe that the personalised Neural Network outperformed all other models across all different settings.

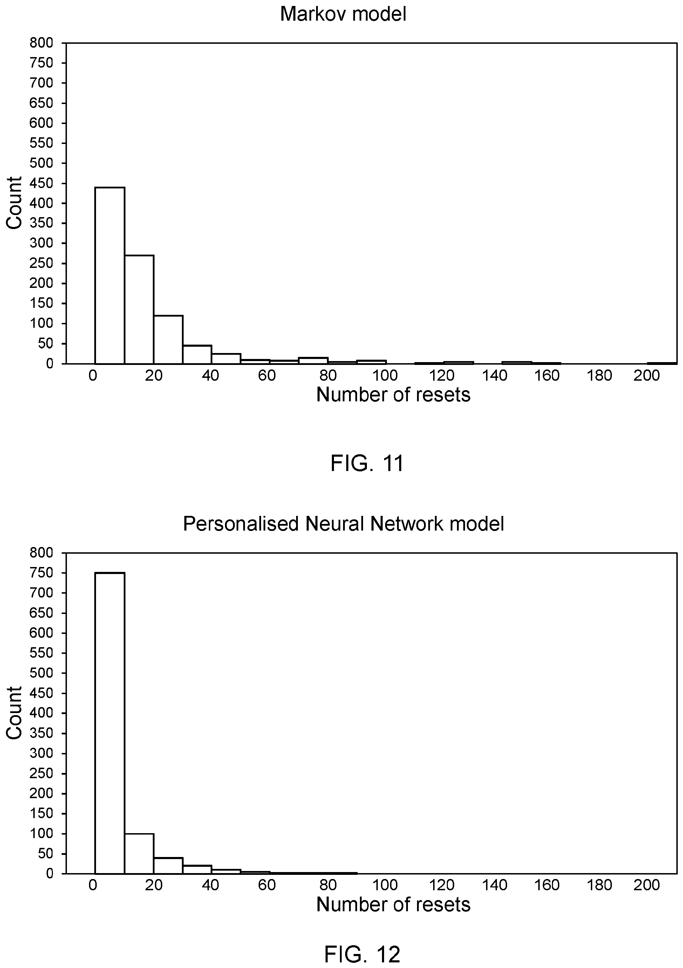

The distributions of the number of resets are depicted in Figures 10-12 for each of the models respectively. The reason for reporting the median number of resets can be derived from this distribution, as it is clearly non-Gaussian. Notably, the variance in predictive performance can be high for all models but is clearly lower for the personalized Neural Network. We note that the two other models had similar distributions to their respective counterparts and settings.

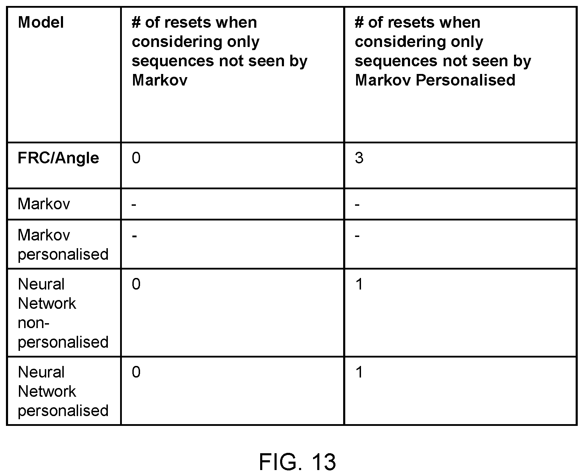

The table in Figure 13 shows the number of resets for sequences not seen by either Markov Chain. This data can be classified as rare as throughout the entire training set, it never occurred once. As the FRC/Angle model generally predicts these data points correctly, it shows the importance of adding features like FRC and the Bearing. As we filtered our dataset for recurrences, this feature-based part of our model may become even more important in the future.

We evaluated the performance of our model without additional performance improvements on an NC6 Azure VM, six-core 2.60 GHz processor & Tesla K80 GPU 24 GB.

The static feature model can be precomputed, whereas the context feature model is computed on the fly. Precomputing data may efficiently be done using a GPU, whereas on the fly computing might be best done on a CPU due to the dependencies between predictions. In the table below the performance of our model is displayed, which clearly shows the benefit of precomputing the static features.

| **Model component** | **Performance on CPU with batches of size 1 (N=500)** | **Performance on GPU with batches of size 1024 (N~=130k)** |
|---|---|---|
| **Static feature model** | 0.0038(+-0.016)s | 0.04(+-0.008)s |
| **Context feature model** | 0.0006s(+-0.0009)s | 0.0006(+-0.0002)s |

Given that we assuming that the model needs to predict ~2km ahead for a user and that a road segment is at least 100m, we would need to make 20 predictions. With precomputation, this would take approximately 0.0006*20=0.012 seconds.

These results validate the benefits of approaches disclosed herein.

It will be appreciated by those skilled in the art that the invention has been illustrated by describing one or more specific embodiments thereof, but is not limited to these embodiments; many variations and modifications are possible, within the scope of the accompanying claims.

## Claims

1. A method for determining a probability of a vehicle traversing a path, the method comprising:
receiving input data into a computer-implemented model (102; 500), wherein the input data is representative of two or more path segments (401) traversed sequentially by a vehicle to reach a decision point (402), and of a set of candidate path segments (403, 404; 510) for the vehicle to traverse to leave said decision point (402);
the model (120; 500) determining a first state vector from the received sequence of path segments (401);
the model (120; 500) determining a second state vector from the received set of candidate path segments (403, 404); and
the model (120; 500) processing the first and second state vectors to generate probability data (505) representative of a respective probability of the vehicle traversing each candidate path segment (403, 404; 510).

2. The method of claim 1, wherein the model (120) comprises one or more artificial neural networks.

3. The method of claim 1 or 2, wherein the model (120; 500) is a trained model, and the method comprises operating the model (120; 500) to process the input data in an inference mode.

4. The method of claim 3, comprising generating the probability data (505) before the vehicle reaches said decision point (402).

5. The method of any preceding claim, comprising determining the set of candidate path segments (403, 404) from map data that encodes a graph representative of a road network.

6. The method of any preceding claim, wherein the input data comprises historic trip data and the method comprises using the input data to train the model (120; 500), optionally wherein the model (120; 500) is trained using historic trip data relating to a plurality of vehicles and/or a plurality of drivers, and/or optionally wherein the model (120; 500) is trained using user-specific historic trip data for a vehicle or driver, and the method comprises the model (120; 500) using one or more weights determined from the user-specific historic trip data to generate probability data (505) in respect of the vehicle or driver when operating in an inference mode.

7. The method of any preceding claim, wherein each traversed path segment (401) and each candidate path segment (403, 404) is represented in the input data by a respective path-segment identifier, and/or wherein each traversed path segment (401) and each candidate path segment (403, 404) is represented in the input data by a respective path type and a respective bearing.

8. The method of any preceding claim, wherein the model (120; 500) is configured to receive and process sequences of path segments (401) up to a maximum sequence length, wherein the maximum sequence length is between two and ten.

9. The method of any preceding claim, wherein the model (120; 500) comprises a recurrent neural network (RNN) and is arranged to generate the first state vector by receiving data representative of the sequence of path segments (401) into the RNN.

10. The method of any preceding claim, wherein the model (120; 500) is an inference model that is generated from a training model after training of the training model (120; 500) is complete, and wherein the inference model comprises precomputed look-up data representative of respective precomputed first state vectors for each of a plurality of sequences of path segments.

11. The method of any preceding claim, wherein processing the first and second state vectors to generate the probability data (505) comprises determining similarity data representative of a measure of similarity between the first and second state vectors, preferably wherein the similarity data is the dot product of the first and second state vectors.

12. The method of claim 11, wherein determining the probability data (505) comprises passing the similarity data through a fully connected output layer of the model, and performing a softmax operation on an output of the fully connected output layer.

13. The method of any preceding claim, comprising receiving additional input data (501) into the model, wherein the additional input data (501) comprises time data, representative of a time associated with the traversal of the sequence of path segments (401) by the vehicle, and/or identity data representative of an identity of the vehicle or of a driver of the vehicle; preferably wherein the model comprises a general model (503) and a contextual model (506), wherein the general model (503) is arranged to output data for processing by the contextual model (506), and wherein the general model (503) is configured to generate output that is not dependent on the additional input data (501), and the contextual model (506) is configured to generate output that is dependent on the additional input data (501).

14. A computer processing system for determining a probability of a vehicle traversing a path, wherein the computer processing system is configured to perform a method according to any one of claims 1 to 13.

15. Computer software comprising instructions which, when executed on a computer processing system, cause the computer processing system to perform a method according to any one of claims 1 to 13.

## Patentansprüche

1. Verfahren zum Bestimmen einer Wahrscheinlichkeit der Durchfahrt einer Strecke durch ein Fahrzeug, wobei das Verfahren Folgendes umfasst:
Empfangen von Eingabedaten in einem computerimplementierten Modell (102: 500), wobei die Eingabedaten zwei oder mehr Streckensegmente (401), die von einem Fahrzeug nacheinander durchfahren werden, um einen Entscheidungspunkt (402) zu erreichen, und einen Satz von Kandidatenstreckensegmenten (403, 404; 510) für die Durchfahrt des Fahrzeugs zum Verlassen des Entscheidungspunkts (402) darstellen;
das Modell (120; 500) einen ersten Zustandsvektor aus der empfangenen Sequenz von Streckensegmenten (401) bestimmt;
das Modell (120; 500) einen zweiten Zustandsvektor aus dem empfangenen Satz von Kandidatenstreckensegmenten (403; 404) bestimmt; und
das Modell (120; 500) den ersten und zweiten Zustandsvektor verarbeitet, um Wahrscheinlichkeitsdaten (505) zu erzeugen, die eine jeweilige Wahrscheinlichkeit der Durchfahrt jedes Kandidatenstreckensegments (403, 404; 510) durch das Fahrzeug darstellen.

2. Verfahren nach Anspruch 1, wobei das Modell (120) ein oder mehrere künstliche neuronale Netze umfasst.

3. Verfahren nach Anspruch 1 oder 2, wobei das Modell (120; 500) ein trainiertes Modell ist und das Verfahren Betreiben des Modells (120; 500) zum Verarbeiten der Eingabedaten in einem Inferenzmodus umfasst.

4. Verfahren nach Anspruch 3, umfassend Erzeugen der Wahrscheinlichkeitsdaten (505), bevor das Fahrzeug den Entscheidungspunkt (402) erreicht.

5. Verfahren nach einem vorstehenden Anspruch, umfassend Bestimmen des Satzes von Kandidatenstreckensegmenten (403, 404) aus Kartendaten, die einen Graphen codieren, der ein Straßennetzwerk darstellt.

6. Verfahren nach einem vorstehenden Anspruch, wobei die Eingabedaten historische Fahrtdaten umfassen und das Verfahren Verwenden der Eingabedaten zum Trainieren des Modells (120; 500) umfasst, wahlweise wobei das Modell (120; 500) unter Verwendung von historischen Fahrtdaten trainiert wird, die sich auf eine Vielzahl von Fahrzeugen und/oder eine Vielzahl von Fahrern beziehen, und/oder wahlweise, wobei das Modell (120; 500) unter Verwendung von benutzerspezifischen historischen Fahrtdaten für ein Fahrzeug oder einen Fahrer trainiert wird und das Verfahren umfasst, dass das Modell (120; 500) eine oder mehrere aus den benutzerspezifischen historischen Fahrtdaten bestimmte Gewichtungen verwendet, um Wahrscheinlichkeitsdaten (505) in Bezug auf das Fahrzeug oder den Fahrer im Betrieb in einem Interferenzmodus zu erzeugen.

7. Verfahren nach einem vorstehenden Anspruch, wobei jedes durchfahrene Streckensegment (401) und jedes Kandidatenstreckensegment (403, 404) in den Eingabedaten durch eine jeweilige Streckensegmentkennung dargestellt wird, und/oder wobei jedes durchfahrene Streckensegment (401) und jedes Kandidatenstreckensegment (403, 404) in den Eingabedaten durch einen jeweiligen Streckentyp und eine jeweilige Bedeutung dargestellt wird.

8. Verfahren nach einem vorstehenden Anspruch, wobei das Modell (120; 500) zum Empfangen und Verarbeiten von Sequenzen von Streckensegmenten (401) bis zu einer maximalen Sequenzlänge konfiguriert ist, wobei die maximale Sequenzlänge zwischen zwei und zehn beträgt.

9. Verfahren nach einem vorstehenden Anspruch, wobei das Modell (120; 500) ein rekurrentes neuronales Netzwerk (RNN) umfasst und eingerichtet ist, um den ersten Zustandsvektor durch Empfangen von Daten, die die Sequenz von Streckensegmenten (401) darstellen, im RNN zu erzeugen.

10. Verfahren nach einem vorstehenden Anspruch, wobei das Modell (120; 500) ein Inferenzmodell ist, das aus einem Trainingsmodell nach Abschluss des Trainierens des Trainingsmodells (120; 500) erzeugt wird, und wobei das Inferenzmodell vorab berechnete Nachschlagedaten umfasst, die jeweilige vorab berechnete erste Zustandsvektoren für jede einer Vielzahl von Sequenzen von Streckensegmenten darstellen.

11. Verfahren nach einem vorstehenden Anspruch, wobei Verarbeiten des ersten und zweiten Zustandsvektors zum Erzeugen der Wahrscheinlichkeitsdaten (505) Bestimmen von Ähnlichkeitsdaten umfasst, die ein Ähnlichkeitsmaß zwischen dem ersten und zweiten Zustandsvektor darstellen, vorzugsweise wobei das Ähnlichkeitsmaß ein Skalarprodukt des ersten und zweiten Zustandsvektors ist.

12. Verfahren nach Anspruch 11, wobei Bestimmen der Wahrscheinlichkeitsdaten (505) Durchlaufen der Ähnlichkeitsdaten durch eine vollständig verbundene Ausgabeschicht des Modells und Durchführen eines Softmax-Vorgangs an einer Ausgabe der vollständig verbundenen Ausgabeschicht umfasst.

13. Verfahren nach einem vorstehenden Anspruch, umfassend Empfangen von zusätzlichen Eingabedaten (501) im Modell, wobei die zusätzlichen Eingabedaten (501) Zeitdaten umfassen, die eine Zeit darstellen, die mit der Durchfahrt der Sequenz von Streckensegmenten (401) durch das Fahrzeug verknüpft sind, und/oder Kennungsdaten, die eine Identität des Fahrzeugs oder eines Fahrers des Fahrzeugs darstellen; vorzugsweise wobei das Modell ein allgemeines Modell (503) und ein Kontextmodell (506) umfasst, wobei das allgemeine Modell (503) eingerichtet ist, um Daten zum Verarbeiten durch das Kontextmodell (506) auszugeben, und wobei das allgemeine Modell (503) konfiguriert ist, um Ausgaben zu erzeugen, die nicht von den zusätzlichen Eingabedaten (501) abhängen, und das Kontextmodell (506) konfiguriert ist, um Ausgaben zu erzeugen, die von den zusätzlichen Eingabedaten (501) abhängen.

14. Computerverarbeitungssystem zum Bestimmen einer Wahrscheinlichkeit der Durchfahrt einer Strecke durch ein Fahrzeug, wobei das Computerverarbeitungssystem konfiguriert ist, um ein Verfahren nach einem der Ansprüche 1 bis 13 durchzuführen.

15. Computersoftware, umfassend Anweisungen, die, wenn sie auf einem Computerverarbeitungssystem ausgeführt werden, das Computerverarbeitungssystem veranlassen, ein Verfahren nach einem der Ansprüche 1 bis 13 durchzuführen.

## Revendications

1. Procédé de détermination de probabilité qu'un véhicule traverse un trajet, comprenant :
la réception de données d'entrée dans un modèle mis en œuvre par ordinateur (102 ; 500), dans lequel les données d'entrée sont représentatives de deux segments de trajet (401) ou plus traversés séquentiellement par un véhicule pour atteindre un point de décision (402), et d'un ensemble de segments de trajet candidats (403, 404 ; 510) que le véhicule doit traverser pour quitter ledit point de décision (402) ;
le modèle (120 ; 500) déterminant un premier vecteur d'état à partir de la séquence de segments de trajet (401) reçue ;
le modèle (120 ; 500) déterminant un second vecteur d'état à partir de l'ensemble de segments de trajet candidats (403, 404) reçu ; et
le modèle (120 ; 500) traitant les premier et second vecteurs d'état pour générer des données de probabilité (505) représentatives d'une probabilité respective du véhicule traversant chaque segment de trajet candidat (403, 404 ; 510).

2. Procédé selon la revendication 1, dans lequel le modèle (120) comprend un ou plusieurs réseaux neuronaux artificiels.

3. Procédé selon la revendication 1 ou 2, dans lequel le modèle (120 ; 500) est un modèle entraîné, et le procédé comprend le fonctionnement du modèle (120 ; 500) pour traiter les données d'entrée dans un mode d'inférence.

4. Procédé selon la revendication 3, comprenant la génération des données de probabilité (505) avant que le véhicule n'atteigne ledit point de décision (402).

5. Procédé selon une quelconque revendication précédente, comprenant la détermination de l'ensemble de segments de trajet candidats (403, 404) à partir de données cartographiques qui encodent un graphique représentatif d'un réseau routier.

6. Procédé selon une quelconque revendication précédente, dans lequel les données d'entrée comprennent des données de déplacement historiques et le procédé comprend l'utilisation des données d'entrée pour entraîner le modèle (120 ; 500), éventuellement dans lequel le modèle (120 ; 500) est entraîné en utilisant des données de déplacement historiques relatives à une pluralité de véhicules et/ou à une pluralité de conducteurs, et/ou éventuellement dans lequel le modèle (120 ; 500) est entraîné en utilisant des données de déplacement historiques spécifiques à un utilisateur d'un véhicule ou d'un conducteur, et le procédé comprend le modèle (120 ; 500) en utilisant une ou plusieurs pondérations déterminées à partir des données de déplacement historiques spécifiques à un utilisateur pour générer des données de probabilité (505) concernant le véhicule ou le conducteur lorsqu'il fonctionne dans un mode d'inférence.

7. Procédé selon une quelconque revendication précédente, dans lequel chaque segment de trajet (401) traversé et chaque segment de trajet candidat (403, 404) sont représentés dans les données d'entrée par un identifiant de segment de trajet respectif, et/ou dans lequel chaque segment de trajet (401) traversé et chaque segment de trajet candidat (403, 404) sont représentés dans les données d'entrée par un type de trajet respectif et un relèvement respectif.

8. Procédé selon une quelconque revendication précédente, dans lequel le modèle (120 ; 500) est configuré pour recevoir et traiter des séquences de segments de trajet (401) jusqu'à une longueur de séquence maximale, dans lequel la longueur de séquence maximale est comprise entre deux et dix.

9. Procédé selon une quelconque revendication précédente, dans lequel le modèle (120 ; 500) comprend un réseau neuronal récurrent (RNN) et est agencé de manière à générer le premier vecteur d'état en recevant des données représentatives de la séquence de segments de trajet (401) dans le RNN.

10. Procédé selon une quelconque revendication précédente, dans lequel le modèle (120 ; 500) est un modèle d'inférence généré à partir d'un modèle d'entraînement une fois l'entraînement du modèle d'entraînement (120 ; 500) terminé, et dans lequel le modèle d'inférence comprend des données de consultation précalculées représentatives des premiers vecteurs d'état précalculés respectifs pour chacune d'une pluralité de séquences de segments de trajet.

11. Procédé selon une quelconque revendication précédente, dans lequel le traitement des premier et second vecteurs d'état pour générer les données de probabilité (505) comprend la détermination de données de similarité représentatives d'une mesure de similarité entre les premier et second vecteurs d'état, de préférence dans lequel les données de similarité sont le produit scalaire des premier et second vecteurs d'état.

12. Procédé selon la revendication 11, dans lequel la détermination des données de probabilité (505) comprend le passage des données de similarité à travers une couche de sortie entièrement connectée du modèle, et l'exécution d'une opération softmax sur une sortie de la couche de sortie entièrement connectée.

13. Procédé selon une quelconque revendication précédente, comprenant la réception de données d'entrée supplémentaires (501) dans le modèle, dans lequel les données d'entrée supplémentaires (501) comprennent des données temporelles, représentatives d'un temps associé à la traversée de la séquence de segments de trajet (401) par le véhicule, et/ou des données d'identité représentatives d'une identité du véhicule ou d'un conducteur du véhicule ; de préférence dans lequel le modèle comprend un modèle général (503) et un modèle contextuel (506), dans lequel le modèle général (503) est agencé pour produire en sortie des données à traiter par le modèle contextuel (506), et dans lequel le modèle général (503) est configuré pour générer une sortie qui ne dépend pas des données d'entrée supplémentaires (501), et le modèle contextuel (506) est configuré pour générer une sortie qui dépend des données d'entrée supplémentaires (501).

14. Système de traitement informatique de détermination de probabilité qu'un véhicule traverse un trajet, dans lequel le système de traitement informatique est configuré pour exécuter un procédé selon l'une quelconque des revendications 1 à 13.

15. Logiciel informatique comprenant des instructions qui, lorsqu'elles sont exécutées sur un système de traitement informatique, amènent le système de traitement informatique à exécuter un procédé selon l'une quelconque des revendications 1 à 13.
